# EUROPÄISCHE PATENTANMELDUNG

(11) **EP 2 339 299 A2**
(43) Veröffentlichungstag der Anmeldung: **29.06.2011**
(21) Anmeldenummer: 10195440.2
(22) Anmeldetag: 16.12.2010
(51) Int. Cl.: G01D 5/14

(54) **Drehwinkelsensoranordnung und Verfahren zur Feststellung der Drehposition einer Welle**

(30) Priorität: 22.12.2009 DE 102009055189
(71) Anmelder: AB Elektronik GmbH, 59368 Werne (DE)
(72) Erfinder: Klopfenstein, Laurent, 59368, Werne (DE)
(74) Vertreter: Wenzel & Kalkoff

(57) **Zusammenfassung**

Beschrieben sind eine Drehwinkelsensoranordnung und ein Verfahren zur Feststellung der Drehposition α einer Welle 12. An der Welle 12 ist eine Scheibenanordnung 1 mit mindestens einer Scheibe 16a, 16b, 116 angeordnet, die mindestens am Umfang aus ferromagnetischen Material besteht. Die Scheibenanordnung 1 weist eine am Umfang über die Umdrehung der Welle 12 variierende radiale und/oder axiale Anordnung des ferromagnetischen Materials auf. Ein Magnetelement erzeugt ein Magnetfeld, dessen Feldverteilung durch die Scheibenanordnung beeinflusst wird. In einer gegenüber dem Umfang der Scheibenanordnung 1 angeordneten Magnetfeld-Sensoreinheit ist ein Magnetfeld-Sensorelement 22 vorhanden, das die Richtung des Magnetfeldes feststellt.

## Beschreibung

Die Erfindung betrifft eine Drehwinkelsensoranordnung und ein Verfahren zur Feststellung der Drehposition einer Welle.

Insbesondere betrifft die Erfindung einen kontaktlosen magnetischen Sensor, der für den Einsatz in Kraftfahrzeugen vorgesehen ist, bspw. als Kurbelwellensensor.

In der DE 44 00 616 A1 ist ein magnetischer Positionssensor für den Einsatz in Kraftfahrzeugen beschrieben. Auf einer drehenden Welle sind zwei Geberscheiben angeordnet, von denen die erste exzentrisch und die zweite zentrisch angeordnet sind. Ein Permanentmagnet erzeugt ein Magnetfeld, das in einem winkelförmigen Flussleitkörper so geführt wird, dass es einen geschlossenen Magnetkreis mit den Geberscheiben bildet. Dem Umfang jeder Geberscheibe gegenüberliegend ist je ein Magnetfeldsensor angeordnet. Die Abstandsänderung zwischen den Geberscheiben und dem Flussleitkörper wird durch Vergleich der Sensorsignale ermittelt.

In der WO2005/061996 A1 ist eine Vorrichtung zur Bestimmung der Position eines Objektes beschrieben mit einer Magnetsensorbaugruppe, die eine Magnetfeldquelle, einen Magnetsensor und einen Luftspalt aufweist. Ein Träger, der einen Abschnitt mit variierenden magnetischen Eigenschaften aufweist, bewegt sich bei Bewegung des Objektes durch den Luftspalt. Hierbei ändert sich das durch den Magnetsensor gemessene magnetische Feld. Aus der Korrelation mit dem erfassten magnetischen Feld wird die Position des Objektes ermittelt. Die variierenden magnetischen Eigenschaften können durch variierende Dicke des Trägers oder durch Änderung der magnetischen Querschnittsfläche in Abhängigkeit von der Bewegung erzielt werden.

Es ist Aufgabe der Erfindung, eine Sensoranordnung und ein Verfahren anzugeben, mit denen eine exakte, gegenüber Störeinflüssen relativ unempfindliche Feststellung der Drehposition einer Welle möglich ist.

Die Aufgabe wird gelöst durch eine Sensoranordnung gemäß Anspruch 1 und ein Verfahren gemäß Anspruch 13. Abhängige Ansprüche beziehen sich auf vorteilhafte Ausführungsformen der Erfindung.

Erfindungsgemäß ist an der Welle, deren Drehposition der Sensor erfassen soll, eine Scheibenanordnung vorgesehen. Die Scheibenanordnung kann eine oder mehrere Scheiben umfassen, d. h. ebene Elemente, die sich bei der Rotation der Welle mitdrehen.

Die Scheibenanordnung besteht mindestens an ihrem Umfang aus ferromagnetischem Material, insbesondere bevorzugt weichmagnetischem Material, bspw. Eisen, Ferrit etc. Sie weist eine solche Form auf und/oder ist so an der Welle angebracht, dass sich über die Umdrehung der Welle am Umfang der Scheibenanordnung eine axial variierende Anordnung des ferromagnetischen Materials der Scheibe bzw. der Scheiben ergibt. Dies ist so zu verstehen, dass sich bei einer Rotation der Welle gegenüber einem am Umfang der Scheibenanordnung feststehenden Beobachtungspunkt eine je nach Drehposition der Welle verschiedene Anordnung des ferromagnetischen Materials ergibt. Diese kann einerseits radial variieren, so dass sich bei Rotation der Welle gegenüber einem feststehenden Beobachtungspunkt ein variabler Abstand der Berandung der Scheibenanordnung von dem Beobachtungspunkt ergibt. Andererseits kann sich auch eine axial variable Anordnung des ferromagnetischen Materials gegenüber dem Beobachtungspunkt ergeben, d. h. bspw. eine je nach Drehposition unterschiedliche axiale Verschiebung einer Berandung der Scheibenanordnung gegenüber einem feststehenden Beobachtungspunkt. Wie anhand der nachfolgenden Ausführungsbeispiele deutlich wird, ist es besonders bevorzugt, wenn die Variation sowohl in radialer als auch in axialer Richtung erfolgt.

Der variierende Verlauf des ferromagnetischen Materials der Scheibenanordnung an deren Umfang wird zur Feststellung der Drehposition der Welle verwendet. Hierzu wird durch ein Magnetelement, bevorzugt ein Permanentmagnetelement, ein Magnetfeld erzeugt, dessen Feldverteilung durch das ferromagnetische Material der Scheibenanordnung beeinflusst wird. Mittels einer gegenüber dem Umfang der Scheibenanordnung angeordneten Magnetfeld-Sensoreinheit wird das in der jeweiligen Drehposition der Welle resultierende Magnetfeld am Umfang der Scheibenanordnung ermittelt.

Erfindungsgemäß enthält die Magnetfeld-Sensoreinheit ein Magnetfeld-Sensorelement, das die Richtung des Magnetfeldes an seinem Ort feststellen kann. Erfasst wird also am Ort des Magnetfeld-Sensorelements die Raumrichtung des Feldstärke-Vektors. Die Raumrichtung kann dabei entsprechend der Drehposition eine Vielzahl verschiedener Richtungswerte annehmen. Diese können bspw. als separate Richtungskomponenten (x, y, z) oder als Winkelwerte erfasst werden. Bevorzugt erfolgt die Ermittlung der Richtung des Magnetfelds als Magnetfeld-Winkelwert innerhalb einer Beobachtungsebene. Derartige richtungsempfindliche Magnetfeld-Sensoreinheiten sind an sich bekannt. Sie können bspw. nach dem GMR- oder Hall-Prinzip arbeiten. Die Beobachtungsebene ist bevorzugt im Wesentlichen parallel zur Axialrichtung der Welle ausgerichtet, weiter bevorzugt liegt die Längsmittelachse der Welle im Wesentlichen innerhalb der Beobachtungsebene.

Die erfindungsgemäße Drehwinkelsensoranordnung bzw. das entsprechende Verfahren ermöglichen die Feststellung der Drehposition der Welle folglich, indem eine sich durch die Rotation ändernde Richtung eines Magnetfeldes am Umfang der Scheibenanordnung ermittelt wird. Eine solche Richtungsänderung des Feldes in Abhängigkeit von der Drehposition der Welle ergibt sich durch den variablen Verlauf der Anordnung des Materials der Scheibe bzw. der Scheiben am Umfang.

Durch die Beobachtung der Richtung des Magnetfeldes ergibt sich eine genaue Signalerfassung. Im Gegensatz zur Messung der Stärke eines Magnetfeldes als skalare Größe spielen mechanische Toleranzen eine untergeordnete Rolle. Besonders bevorzugt ist, dass sich die Erfassung bereits mit nur einem einzigen Magnetfeld-Sensor durchführen lässt und nicht - wie in vorbekannten Sensoranordnungen - mehrere Sensoren an unterschiedlichen Orten benötigt werden.

Gemäß einer Weiterbildung der Erfindung umfasst die Scheibenanordnung mindestens zwei Scheiben, die sich bevorzugt im Wesentlichen quer zur Axialrichtung der Welle erstrecken und so an der Welle angebracht sind oder eine solche Form aufweisen, dass ihre Berandungslinien am Umfang voneinander abweichend verlaufen. Die Scheiben sind in Axialrichtung hintereinander angeordnet, wobei sie bevorzugt durch ein Abstandselement, bspw. eine dazwischen angeordnete weitere Scheibe axial im Abstand voneinander gehalten werden. Dies ist eine Möglichkeit, wie die über die Umdrehung variable Anordnung des Materials der Scheibenanordnung realisiert werden kann. Abweichende Randlinien der Scheiben ergeben sich bspw. durch zwei Scheiben unterschiedlicher Form, bspw. rund/oval oder durch voneinander abweichende zentrische/exzentrische Anordnung von Scheiben gleicher Form und Größe an der Welle. Maßgeblich ist, dass die Berandungslinien der beiden Scheiben, d.h. die jeweils von der Mittelachse der Welle aus in alle Richtungen definierte Erstreckung der Scheiben, voneinander abweichend verlaufen.

Hierbei kann ggf. eine Abweichung der Berandungslinien bereits an einer Stelle des Umfangs ausreichen, es ist aber bevorzugt, dass die Berandungslinien generell voneinander abweichend verlaufen und sich dabei allenfalls (in Axialrichtung der Welle gesehen) an einzelnen, bevorzugt 2 Punkten schneiden.

In einer alternativen Ausführungsform kann der variierende radiale und/oder axiale Verlauf der Scheibenanordnung auch durch nur eine Scheibe erreicht werden. Um einen radial variierenden Verlauf zu erzielen, kann diese Scheibe eine von der Kreisform abweichende Form aufweisen, bspw. elliptisch ausgestaltet sein, oder im bevorzugten Fall einer Kreisform exzentrisch an der Welle angeordnet sein. Um eine axial variierende Anordnung am Umfang zu erzielen, kann die Scheibe unter einem von 90° abweichenden Winkel an der Welle befestigt, d. h. schräg zu dieser angeordnet sein. Hierdurch ergibt sich bei Drehung der Welle gegenüber einem festen Beobachtungspunkt am Umfang eine je nach Drehposition der Welle unterschiedliche axiale Anordnung.

Gemäß einer Weiterbildung der Erfindung ist die Scheibenanordnung so geformt und/oder an der Welle angeordnet, dass sich am Magnetfeld-Sensorelement für jede Drehposition der Welle eine zugeordnete Magnetfeldrichtung, d.h. ein Magnetfeld-Richtungswert ergibt, der bevorzugt als Magnetfeld-Winkelwert in einer festen Beobachtungsebene ermittelt wird. Auf diese Weise kann ein Absolutsensor realisiert werden, d.h. es wird nicht lediglich inkremental eine Rotation der Welle ermittelt, sondern direkt aus der gemessenen Richtung des Magnetfeldes die absolute Drehposition bestimmt. Bevorzugt wird eine solche eindeutige Zuordnung dadurch erzielt, dass die Scheibenanordnung durch Form bzw. Art der Anbringung an der Welle über deren Umdrehung eine sowohl radiale als auch axiale Variation der Anordnung am Umfang aufweist. Während bspw. im Fall einer rechtwinklig angebrachten ovalen Scheibe oder exzentrischen runden Scheibe eine nur radiale Variation erfolgt, die sich jeweils nach 180° Umdrehung wiederholt und damit nicht eindeutig einer Drehposition der Welle zugeordnet werden kann, kann durch zusätzlich axiale Variation (bspw. Schrägstellung der Scheibe oder Anordnung einer weiteren Scheibe im axialen Abstand) die eindeutige Zuordnung hergestellt werden.

Gemäß einer Weiterbildung der Erfindung umfasst die Scheibenanordnung mindestens eine Scheibe, die rund oder elliptisch und exzentrisch an der Welle befestigt ist. Weiter bevorzugt sind zwei Scheiben vorgesehen, die rund oder elliptisch sind, besonders bevorzugt mit gleichem Radius bzw. gleicher Halbachse. Dabei sind weiter bevorzugt beide Scheiben exzentrisch an der Welle befestigt, wobei die Exzentrizitäten der beiden Scheiben zueinander einen Winkel bilden, d.h. nicht parallel zueinander sind. Bevorzugt sind die Exzentrizitäten in Axialrichtung der Welle gesehen senkrecht zueinander. Eine solche Anordnung ermöglicht die Erfassung der absoluten Drehposition der Welle.

Das Magnetelement kann im Prinzip an der Scheibenanordnung oder an der Welle angeordnet sein. Bevorzugt ist es stationär relativ zum Magnetfeld-Sensorelement angeordnet. Besonders bevorzugt ist es Teil der Magnetfeld-Sensoreinheit und somit am Umfang der Scheibenanordnung angeordnet.

Das Magnetelement ist bevorzugt quer zur Axialrichtung der Welle magnetisiert, weiter bevorzugt auch quer zur Radialrichtung der Welle, d.h. die magnetischen Pole sind tangential zur Welle ausgerichtet. Ein solchermaßen gerichtetes Magnetfeld ist gut geeignet, um je nach Anordnung der Scheiben Feldverteilungen mit verschiedenen Richtungen hervorzurufen.

Gemäß einer Weiterbildung der Erfindung ist das Magnetelement quer zur Axialrichtung der Welle vom Magnetfeld-Sensorelement beabstandet. Besonders bevorzugt erfasst hierbei das Magnet-Sensorelement das Streumagnetfeld des Magnetelements, d.h. einen in Luft (und nicht in einem magnetisch leitfähigen Medium) geführten Anteil des Feldes. Während es bei Magnetfeldsensoren im Allgemeinen üblich ist, ein Magnetfeld zur Erhöhung der Feldstärke in einem möglichst geschlossenen Magnetkreis zu führen, hat es sich für die erfindungsgemäße Sensoranordnung als besonders vorteilhaft herausgestellt, das Streumagnetfeld zu erfassen, weil sich hier besonders günstig eine Richtungsänderung in Abhängigkeit von der Position der Scheibenanordnung erzielen lässt.

Gemäß einer Weiterbildung der Erfindung ist ein ferromagnetisches Flusskonzentrationselement vorgesehen. Das Flusskonzentrationselement kann bspw. als Joch ausgebildet sein, so dass das Magnetfeld des Magnetelements zu einem Teil in dem Joch geführt wird. Bevorzugt ist allerdings ein Flusskonzentrationselement, das vom Magnetelement und weiter bevorzugt auch vom Magnetfeld-Sensorelement beabstandet ist, so dass an diesem weiterhin ein Streumagnetfeld erfasst wird. Wie im Zusammenhang mit den bevorzugten Ausführungen deutlich wird, kann eine vorteilhafte Feldverteilung erreicht werden durch ein Flusskonzentrationselement, das, gesehen aus Richtung des Umfangs der Scheibenanordnung, hinter dem Magnetfeld-Sensorelement angeordnet ist, d.h. das Magnetfeld-Sensorelement zwischen dem Flusskonzentrationselement und dem Umfang der Scheibenanordnung angeordnet ist.

Die Verarbeitung des vom Magnetfeld-Sensorelement gelieferten Signals kann auf verschiedene Arten erfolgen. Insbesondere kann das elektrische Sensorsignal als analoges Signal (bspw. Spannungs- oder Stromsignal) oder als digitaler Wert geliefert werden. Weiter ist es möglich, den Ausgangswert des Magnetfeld-Sensorelements direkt als Ausgangssignal der Magnetfeld-Sensoreinheit zu verwenden und eine weitergehende Verarbeitung ggf. extern durchzuführen. Gemäß einer Weiterbildung der Erfindung ist aber vorgesehen, dass die Magnetfeld-Sensoreinheit eine Verarbeitungseinheit aufweist, mit der ein am Magnetfeld-Sensorelement gemessener Winkelwert einem Positionswert der Welle zugeordnet werden kann. Diese Verarbeitungseinheit, die bevorzugt als digitale elektrische Schaltung realisiert ist und bspw. einen Mikroprozessor, Mikrokontroller oder FPGA umfassen kann, kann vorteilhafterweise eine weitergehende Signalbearbeitung durchführen, bspw. Linearisierung, Interpolation und/oder Fehlererkennung.

Nachfolgend werden Ausführungsformen der Erfindung anhand von Zeichnungen näher beschrieben. Hierbei zeigen
- Figur 1: in Seitenansicht eine Welle mit einer ersten Ausführungsform einer Sensoranordnung;
- Figur 2: in Draufsicht die Welle und Sensoranordnung aus Figur 1;
- Figur 3: in vergrößerter Darstellung ein Teil der Draufsicht aus Figur 2 mit Darstellung eines magnetischen Feldverlaufs;
- Figur 4a-4d: in teilweiser schematischer Darstellung Seitenansichten der Sensoranordnung aus Figur 1, Figur 2 mit Kennzeichnung der Richtung eines Magnetfelds;
- Figur 5: in Diagrammform die Abhängigkeit von Abständen der Scheiben der Sensoranordnung aus Figur 1, Figur 2 sowie eines Magnetfeld-Winkels in Abhängigkeit von der Drehposition der Welle;
- Figur 6: in Seitenansicht eine Welle mit einer zweiten Ausführungsform einer Sensoranordnung,
- Figur 7: die Sensoranordnung aus Fig. 6 in Draufsicht.

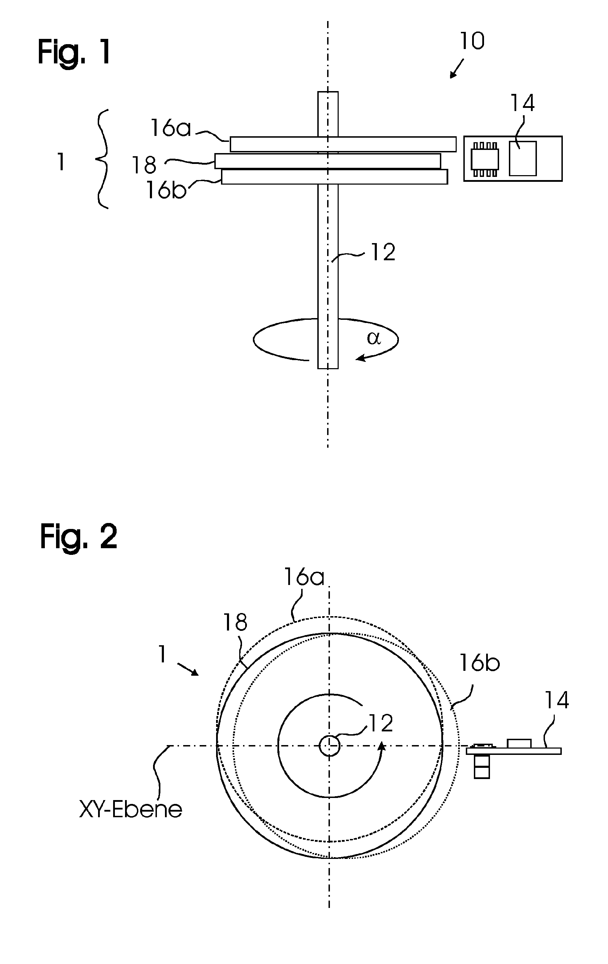

In Figur 1 ist eine erste Ausführungsform einer Sensoranordnung 10 dargestellt mit einer Welle 12, deren Drehposition bzw. Drehwinkel α durch eine Sensoreinheit 14 ermittelt werden soll.

Eine Scheibenanordnung 1 auf der Welle 12 umfasst eine erste Scheibe 16a und eine zweite Scheibe 16b, die axial im Abstand voneinander befestigt sind. Zwischen den Scheiben 16a, 16b ist als Abstandselement eine weitere Scheibe 18 angeordnet.

Die Scheiben 16a, 16b sind, wie in Figur 2 aus axialer Sicht deutlich wird, unterschiedlich an der Welle 12 angeordnet.

Im gezeigten Beispiel sind die Scheiben 16a, 16b ebenso wie das Abstandselement 18 jeweils rund mit gleichem Durchmesser. Während das Abstandselement 18 zentrisch an der Welle 12 angebracht ist, ist die erste Scheibe 16a exzentrisch angebracht, wobei sie in der in Figur 2 dargestellten Drehposition nach oben verschoben ist. Die zweite Scheibe 16b ist ebenfalls exzentrisch angeordnet, wobei sie in der in Figur 2 dargestellten Drehposition nach rechts verschoben ist. Die Exzentrizitäten der beiden Scheiben 16a, 16b sind in diesem Fall also orthogonal zueinander.

Wie aus Figur 2 ersichtlich, ergibt sich bei dieser Form und Anordnung der Scheibenanordnung 1 ein voneinander abweichender Verlauf der Randlinien der Scheiben 16a, 16b. In dieser axialen Ansicht schneiden sich die Randlinien (erste Scheibe 16a: gestrichelt; zweite Scheibe 16b: gepunktet) an zwei Punkten; im übrigen Verlauf weichen die Randlinien voneinander ab.

Hierdurch ergibt sich am Umfang der Scheibenanordnung 1 gegenüber einem festen Beobachtungspunkt, an dem eine Sensoreinheit 14 angeordnet ist, ein sowohl radial als auch axial zur Welle 12 variierender Verlauf des Materials der Scheiben 16a, 16b am Umfang der Scheibenanordnung 1. Über die Umdrehung der Welle 12 um den Winkel α zeigt sich für jede der Scheiben 16a, 16b einerseits ein radial variierender Verlauf, d. h. ein sich verändernder radialer Abstand vom Beobachtungspunkt, bzw. von der Sensoreinheit 14. Ebenso ergibt sich auch eine axiale Variation der Verteilung des ferromagnetischen Materials der Scheiben 16a, 16b je nachdem, welche der Scheiben 16a, 16b gegenüber der jeweils anderen Scheibe 16a, 16b näher an der Sensoreinheit 14 angeordnet ist.

Wie nachfolgend erläutert wird, können diese Abweichungen dazu verwendet werden, um mit Hilfe der Sensoreinheit 14 die Drehposition α der Scheiben 16a, 16b und damit der Welle 12 zu ermitteln. Im gezeigten Beispiel ist es dabei so, dass beim Drehen der Welle 12 gegenüber der stationär angeordneten Sensoreinheit 14 sich am Umfangsbereich der Scheiben 16a, 16b unmittelbar vor der Sensoreinheit 14 in jeder Drehposition eine andere Kombination der jeweiligen Abstände der oberen und unteren Scheibe 16a, 16b von der Sensoreinheit 14 ergibt. Damit sind die verschiedenen Drehpositionen α anhand der jeweiligen Kombination der Abstandsmaße unterscheidbar. Wie nachfolgend erläutert wird, kann hierdurch ein absoluter Winkelsensor realisiert werden.

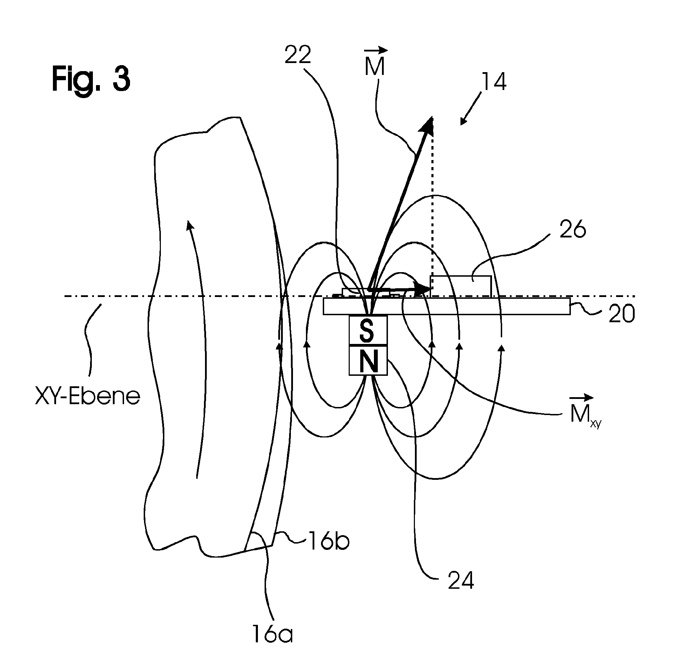

In Figur 3 ist die Sensoreinheit 14 in ihrer Anordnung am Umfang der Scheiben 16a, 16b vergrößert dargestellt. Die Sensoreinheit 14 umfasst ein Trägerelement 20, bspw. eine Leiterplatte, auf der ein magnetischer Richtungssensor 22 aufgebracht ist. Auf der Unterseite des Trägers 20, gegenüber dem Magnetfeldsensorelement 22, ist ein Permanentmagnet 24 angeordnet, der in Richtung auf das Magnetfeldsensorelement 22 magnetisiert ist. Der Permanentmagnet 24 ist durch seine Anordnung beabstandet von Magnetfeld-Sensorelement 22, wobei die Abstandsrichtung senkrecht zur Axialrichtung der Welle 12 angeordnet ist.

Auf dem Träger 20 ist hinter dem Magnetfeld-Sensorelement 22 ein weichmagnetisches Flusskonzentrationselement 26 angeordnet, das als Block aus Weicheisen ausgebildet ist. Das Flusskonzentrationselement 26 dient zur Ausrichtung des Magnetfeldes, d. h. zur Herstellung einer für die Erfassung gut geeigneten Feldverteilung.

Das Magnetfeld-Sensorelement 22 ist ein elektrischer Magnetfeld-Sensor, der die Richtung des magnetischen Felds feststellen und als elektrisches Signal ausgeben kann. In der beschriebenen Ausführung wird die Richtung des magnetischen Feldes in der Ebene des flachen, auf dem Träger 20 angeordneten Sensorelements 22 ermittelt, d. h. die Richtung des Magnetfeldvektors MXY in der XY-Ebene (d. h. in der Ebene, die parallel zum Träger 20 liegt und damit auch parallel zur Welle 12). Wie in Fig. 3 skizziert, hat das Magnetfeld am Ort des Sensorelements 22 in der Regel eine Richtung, die nicht ausschließlich in der XY-Ebene liegt, d. h. der Vektor M der magnetischen Flussdichte bildet einen Winkel zur XY-Ebene. In diesem Fall erfasst das Magnetfeld-Sensorelement 22 die Projektion des Vektors M auf die XY-Ebene, d. h. die Richtung des Vektors MXY innerhalb der XY-Ebene. Diese Richtung lässt sich durch einen Sensorwinkel β im Bereich von 0-360° angeben.

Magnetfeld-Sensorelemente, die die Richtung des Magnetfeldes ermitteln, sind an sich bekannt und wie in der bevorzugten Ausführung verwendet, als integrierte Bauelemente verfügbar. Beispiele sind integrierte Schaltkreise von Melexis, die auf Hall-Sensortechnologie basieren oder von Infinion, die auf iGMR-Technologie basieren, d. h. integierte Schaltkreise, die die Richtung des Magnetfeldes anhand des GMR-Effekts ermitteln.

Das Magnetelement 24 erzeugt ein Magnetfeld, das sich überwiegend als Streumagnetfeld darstellt, d.h. überwiegend in Luft verläuft. Der Feldverlauf in Figur 3 ist hierbei nur schematisch gezeichnet, da real das ferromagnetische Material der Scheiben 16a, 16b ebenso wie das Flusskonzentrationselement 26 das Feld bündelt. Wie aber jedenfalls deutlich wird, verläuft bei relativ weit entfernten Scheiben 16a, 16b aufgrund der Konzentrationswirkung des Flusskonzentrationselements 26 das magnetische Feld in der Beobachtungsebene des Magnetfeld-Sensorelements 22, d. h. der XY-Ebene, am Ort des Magnetfeld-Sensorelements 22 im Wesentlichen radial zur Welle 12.

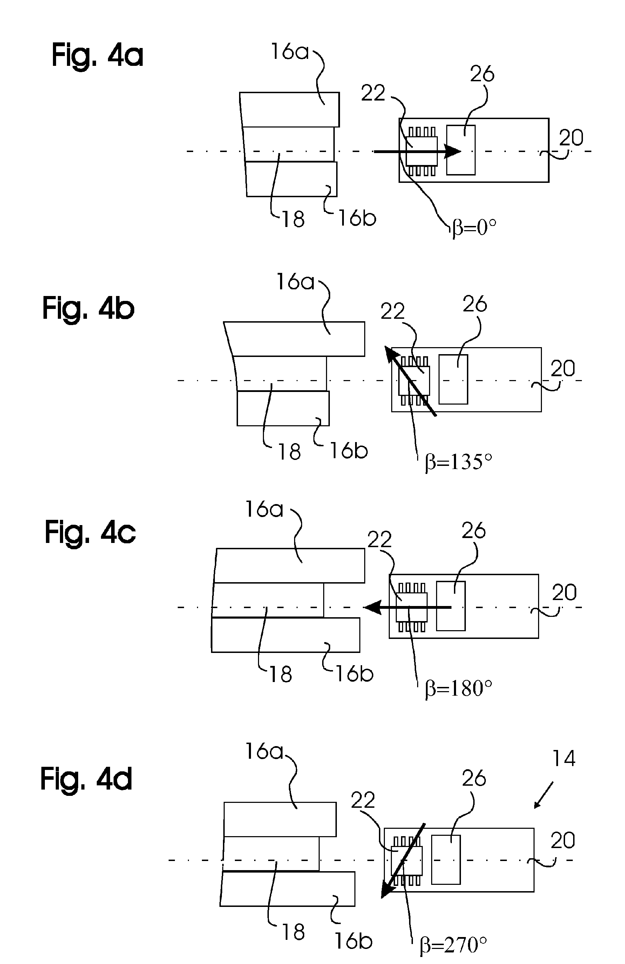

Wie bereits erläutert, ergibt sich nun im Bereich vor der Magnetfeld-Sensoreinheit 14 je nach Drehposition der Welle 12 eine unterschiedliche Konfiguration der Scheiben 16a, 16b. Wie in den Figuren 4a-4d dargestellt, resultieren hieraus verschiedene Feldverteilungen des magnetischen Feldes, das in der horizontalen XY-Ebene unterschiedliche Ausrichtungen am Ort des Magnetfeld-Sensorelements 22 zeigt.

Die jeweilige Ausrichtung des Feldes in dieser Ebene ist hierbei in Figur 4a-4d durch einen Pfeil angezeigt.

In der Stellung von Figur 4a sind die Scheiben 16a, 16b beide in maximaler Entfernung von der Sensoreinheit 14 angeordnet. Es ergibt sich am Magnetfeldsensorelement 22 der im Wesentlichen radiale Feldverlauf, bei dem das Feld in der Beobachtungsebene durch das Flusskonzentrationselements 26 in Richtung von der Scheibenanordnung 1 weg weisend ausgerichtet ist. Diese Richtung des Magnetfeldes wird als β=0° festgelegt.

Bei einer Drehbewegung der Welle 12 ergeben sich nun verschiedene Abstände der Scheiben 16a, 16b. In der in Figur 4b gezeigten Position steht die erste Scheibe 16a stärker hervor, während sich die zweite Scheibe 16b in größerem Abstand befindet. Durch das ferromagnetische Material der Scheibe 16a richtet sich das Magnetfeld in Richtung auf die Scheibe 16a aus, so dass sich am Magnetfeld-Sensorelement 22 ein Magnetfeld unter einem Winkel von ca. 135° gegenüber der Ausgangsstellung (Figur 4a) ergibt.

In der in Figur 4c dargestellten Stellung sind beide Scheiben 16a, 16b im Minimalabstand von der Sensoreinheit 14 angeordnet. Die resultierende Richtung des Magnetfeldes am Magnetfeld-Sensorelement 22 beträgt β=108° gegenüber der Ausgangsstellung (Figur 4a);

In Figur 4d schließlich ist die untere Scheibe 16b näher am Magnetfeld-Sensorelement 22 angeordnet, so dass sich ein Winkel des Magnetfeldes von etwa β=225° ergibt.

Erkennbar ist somit jeder Drehposition α der Welle 12 und der damit verbundenen Konstellation der Scheiben 16a, 16b vor der Sensoreinheit 14 ein Winkel β des Magnetfelds am Ort des Magnetfeld-Sensorelements 22 zugeordnet.

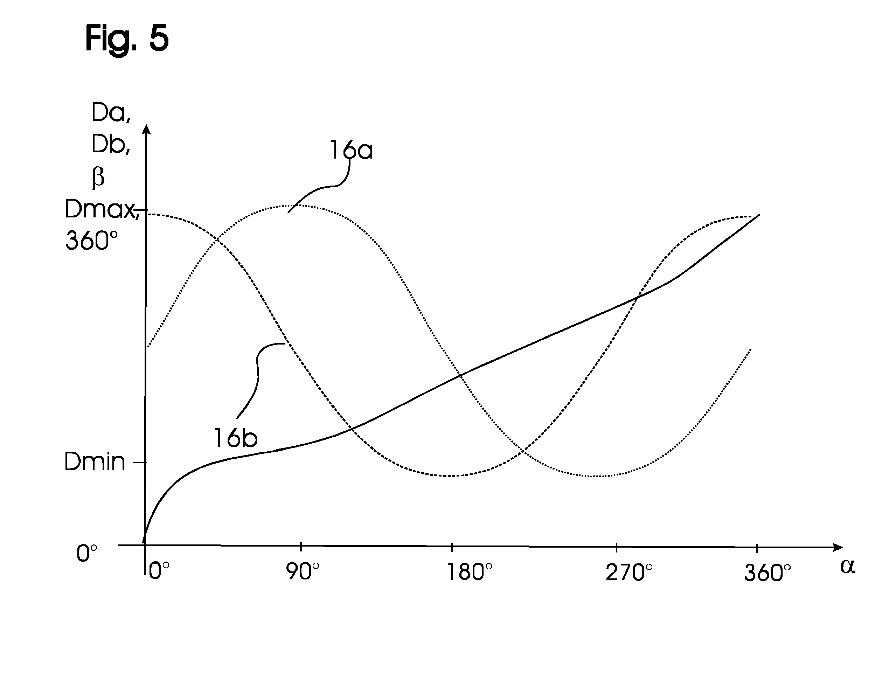

In der Fig. 5 ist für den Drehwinkel α der Welle 12 beispielhaft jeweils der variable (radiale) Abstand Da (gepunktete Linie), Db (gestrichelte Linie) der Scheiben 16a, 16b vom Magnetfeld-Sensorelement 22 gezeigt, der zwischen einem Minimalwert Dmin und einem Maximalwert Dmax variiert. Hierbei ergibt sich für jeden Rotationswinkel α der Welle 12 aus der entsprechenden Konstellationen der Abstände der Scheiben 16a, 16b eindeutig ein detektierter Winkel β (durchgezogene Linie) des Magnetfeldes.

Im dargestellten Beispiel der Scheibenanordnung 1 mit zwei runden, exzentrisch zueinander angeordneten Scheiben 16a, 16b ist allerdings die Abhängigkeit des Magnetfeld-Winkels β vom Drehwinkel α der Welle 12 nicht linear. Hierfür müssten die Scheiben 16a, 16b eine andere Form aufweisen, bei der die Berandungslinien umgekehrt proportional zur beobachteten Nichtlinearität gewählt werden, so dass sich diese Nichtlinearität kompensiert. In der gezeigten Ausführungsform wird die Linearisierung allerdings durch eine in der Sensoreinheit durchgeführte elektronische Verarbeitung der Sensordaten erzielt, nämlich indem mittels eines Lookup-Tables dem jeweils beobachteten Magnetfeld-Winkel β ein zugehöriger Rotationswinkel α der Welle 12 zugeordnet wird.

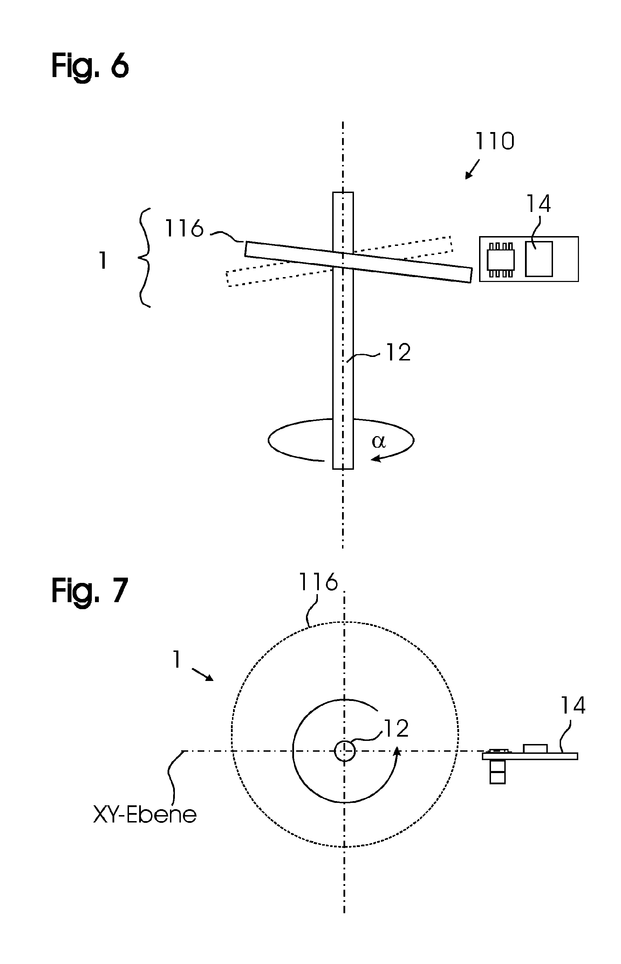

In Fig. 6,7 ist eine zweite Ausführungsform einer Sensoranordnung 110 dargestellt. Die Sensoranordnung 110 weist mit der ersten Ausführungsform übereinstimmende Elemente auf, was durch Verwendung gleicher Bezugszeichen angezeigt wird. Im Folgenden werden nur die Unterschiede erläutert.

Bei der zweiten Ausführungsform einer Sensoranordnung 110 ist die Scheibenanordnung 1 an der Welle 12 nur durch eine einzige Scheibe 116 gebildet. Diese ist von runder Form und einerseits exzentrisch an der Welle 12 angeordnet (Fig. 7). Andererseits ist sie auch unter einem von 90° abweichenden Winkel, d. h. schräg, an der Welle 12 angeordnet (Fig. 6). Bevorzugt beträgt die Abweichung des Anstellwinkels von 90° ca. 2-20°.

Ebenso wie bei der ersten Ausführungsform ergibt sich in der Beobachtungsebene (XY) am Magnetfeld-Sensorelement 22 der Sensoreinheit 14 in Abhängigkeit von der Drehposition α der Welle 12 eine jeweils unterschiedliche Richtung β des Magnetfeldes. Auch hier ist die Zuordnung jeweils eindeutig, da jede Konstellation von (radialem) Abstand des Umfangs der Scheibe 116 vom Sensorelement 14 und (axialem) Versatz über eine volle Umdrehung der Welle 12 jeweils nur einmal vorkommt. So kann auch mit der zweiten Ausführungsform einer Scheibenanordnung 1 ein Absolutsensor realisiert werden.

Zu der gezeigten Ausführung sind eine Anzahl von Varianten denkbar.

Einerseits können die Scheiben 16a, 16b außer der gezeigten runden Form auch abweichende Formen aufweisen, insbesondere Ellipsenform, aber auch beliebige andere Formen. Maßgeblich ist allein, dass die Randlinien voneinander abweichen. Während die gezeigte eindeutige Zuordnung jeder Konstellation von Abständen zu jeweils genau einer Drehstellung wünschenswert ist, um einen Absolutsensor zu ermöglichen, kann mit dem dargestellten Sensorprinzip natürlich in gleicher Weise auch ein Inkrementalsensor realisiert werden.

In den oben dargestellten Ausführungsformen wird jeweils nur die Richtung des Magnetfeldes in einer Beobachtungsebene XY ausgewertet. In einer alternativen Ausgestaltung ist es möglich, weitere vom Magnetfeld-Sensorelement 22 gelieferten Informationen über das Magnetfeld zu berücksichtigen und bei der Signalauswertung zu verwenden. Dies betrifft einerseits die Stärke des Magnetfeldes, die je nach dem variablen Abstand des Umfangs der Scheibenanordnung 1 variiert. Die hieraus gewonnenen Informationen können bspw. zur Überprüfung und Plausibilisierung des erhaltenen Sensorwerts benutzt werden. Ebenso ist es auch möglich, einen 3D-Sensor als Magnetfeld-Sensorelement 22 zu verwenden, d. h. ein Element, das die magnetische Flussdichte in Z-Richtung (d. h. senkrecht zur beobachteten XY-Ebene) zusätzlich zum Winkel liefert. Auch dieser Wert kann zur Überprüfung und Plausibilisierung der ermittelten Winkelposition α verwendet werden.

## Patentansprüche

1. Drehwinkelsensoranordnung zur Feststellung der Drehposition (α) einer Welle (12) mit
- einer an der Welle (12) angeordneten Scheibenanordnung (1), die mindestens eine Scheibe (16a, 16b, 116) umfasst, die mindestens am Umfang aus ferromagnetischem Material besteht,
- wobei die Scheibenanordnung (1) am Umfang eine über die Umdrehung der Welle (12) variierende radiale und/oder axiale Anordnung des ferromagnetischen Materials aufweist,
- einem Magnetelement (24), das ein Magnetfeld erzeugt, dessen Feldverteilung durch die Scheibenanordnung (1) beeinflusst wird,
- und mit einer gegenüber dem Umfang der Scheibenanordnung (1) angeordneten Magnetfeldsensoreinheit (14) mit einem Magnetfeld-Sensorelement (22), das die Richtung des Magnetfeldes feststellt.

2. Anordnung nach Anspruch 1, bei der
- das Magnetfeld-Sensorelement (22) die Richtung des Magnetfelds als Magnetfeld-Winkelwert innerhalb mindestens einer Beobachtungsebene ermittelt.

3. Anordnung nach einem der vorangehenden Ansprüche, bei der
- an der Welle (12) mindestens zwei Scheiben (16a, 16b) angeordnet sind, wobei die Scheiben (16a, 16b) eine solche Form aufweisen und/oder so an der Welle (12) angebracht sind, dass ihre Berandungslinien am Umfang voneinander abweichend verlaufen.

4. Anordnung nach Anspruch einem der vorangehenden Ansprüche, bei der
- die Scheibenanordnung (1) am Umfang eine solche Anordnung des ferromagnetischen Materials aufweist, dass jeder Richtung des Magnetfeldes am Magnetfeld-Sensorelement (22) eine absolute Drehposition der Welle (12) zugeordnet ist.

5. Anordnung nach einem der vorangehenden Ansprüche, bei der
- die Scheibenanordnung (1) mindestens eine Scheibe (16a, 16b, 116) aufweist, die rund oder elliptisch und exzentrisch an der Welle (12) befestigt ist.

6. Anordnung nach Anspruch 5, bei der
- die Scheibenanordnung (1) zwei Scheiben (16a, 16b) aufweist, die rund oder elliptisch sind,
- wobei beide Scheiben (16a, 16b) exzentrisch an der Welle (12) befestigt sind,
- und die Exzentrizitäten der beiden Scheiben (16a, 16b) zueinander einen Winkel bilden.

7. Anordnung nach einem der vorangehenden Ansprüche, bei der
- die Scheiben (16a, 16b) in Axialrichtung der Welle (12) voneinander beabstandet sind.

8. Anordnung nach einem der vorangehenden Ansprüche, bei der
- die Scheibenanordnung (1) mindestens eine Scheibe (116) aufweist, die geneigt an der Welle (12) angeordnet ist.

9. Anordnung nach einem der vorhergehenden Ansprüche, bei der
- das Magnetelement (24) quer zur Axialrichtung der Welle (12) magnetisiert
ist.

10. Anordnung nach einem der vorhergehenden Ansprüche, bei der
- das Magnetelement (24) quer zur Axialrichtung der Welle (12) in einem Abstand vom Magnetfeld-Sensorelement (22) angeordnet
- und in Richtung des Magnetfeld-Sensorelements (22) magnetisiert ist.

11. Anordnung nach einem der vorangehenden Ansprüche, bei der
- die Magnetfeld-Sensoreinheit (14) ein ferromagnetisches Flusskonzentrationselement (26) aufweist,
- wobei das Flusskonzentrationselement gesehen aus Richtung des Umfangs der Scheibenanordnung (16a, 16b) hinter dem Magnetfeld-Sensorelement (22) angeordnet ist.

12. Anordnung nach einem der vorangehenden Ansprüche, bei der
- die Magnetfeld-Sensoreinheit (14) eine Verarbeitungseinheit aufweist, um einem am Magnetfeld-Sensorelement (22) gemessenen Winkelwert (β) einen Positionswert (α) zuzuordnen.

13. Verfahren zur Feststellung der Drehposition (α) einer Welle (12), bei dem
- eine Scheibenanordnung (1), die mindestens eine Scheibe (16a, 16b) umfasst, die mindestens am Umfang aus ferromagnetischem Material besteht, an einer Welle (12) angeordnet ist,
- wobei die Scheibenanordnung (1) am Umfang eine über die Umdrehung der Welle (12) variierende radiale und/oder axiale Anordnung des ferromagnetischen Materials aufweist,
- und ein Magnetelement ein Magnetfeld (24) erzeugt, dessen Feldverteilung durch die Scheibenanordnung (1) beeinflusst wird,
- wobei mittels eines Magnetfeld-Sensorelements (22), das gegenüber dem Umfang der Scheibenanordnung (1) angeordnet ist, die Richtung des Magnetfeldes festgestellt wird.
